# EUROPÄISCHE PATENTSCHRIFT

(11) **EP 0 548 686 B1**
(45) Veröffentlichungstag und Bekanntmachung des Hinweises auf die Patenterteilung: **12.03.1997**
(21) Anmeldenummer: 92121038.1
(22) Anmeldetag: 10.12.1992
(51) Int. Cl.: C08L 69/00, C08G 64/18, B01D 71/50, B01D 71/52

(54) **Blends aus Polyether-Copolycarbonaten und hochmolekularen filmbildenden Polycarbonaten**
Blends of polyether-copolycarbonates and high molecular weight, film-forming polycarbonates
Mélanges de polyéther-copolycarbonates et de polycarbonates filmogènes à poids moléculaire élevé

(30) Priorität: 23.12.1991 DE 4142765
(43) Veröffentlichungstag der Anmeldung: 30.06.1993
(73) Patentinhaber: BAYER AG, 51368 Leverkusen (DE)
(72) Erfinder: Dhein, Rolf, Dr., W-4150 Krefeld (DE); Ebert, Wolfgang, Dr., W-4150 Krefeld (DE); Hugl, Herbert, Dr., W-5060 Bergisch Gladbach (DE); Ohst, Holger, Dr., W-5068 Odenthal-Steinhaus (DE)

(56) Entgegenhaltungen:
- EP-A- 0 213 465
- US-A- 4 069 151
- Journal of membrane science, 6036, vol.34, no. 2, November 1987, Amsterdam Muruganandam N.; et al; Evaluation of substituted polycarbonates and blends ...
- WPI/DERWENT AN 79-68425B [38] & US-A-4252922

## Beschreibung

Gegenstand der vorliegenden Erfindung sind Blends aus
a) 5 Gew.-% bis 95 Gew.-% eines segmentierten, aliphatisch-aromatischen Polyether-Copolycarbonats mit Mw (Gewichtsmittel) von 20.000 bis 350.000, vorzugsweise 20.000 bis 120.000 (ermittelt nach der Lichtstreumethode mit dem Streulichtphotometer) der allgemeinen Formel (I) mit einem Gehalt von 10 Gew.-% bis 75 Gew.-% an aromatischen Carbonatstruktureinheiten 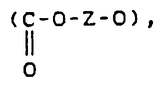 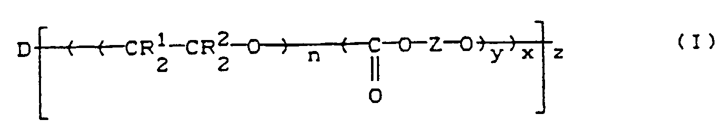 worin
   R¹, R² unabhängig voneinander H, C₁-Alkyl bedeuten
   z 2 bis 4, vorzugsweise 2 oder 3 ist,
   n, x, y so gewählt sind, daß das gesamte Molekulargewicht Mw im Mittel 20.000 - 350.000, bevorzugt 20.000 - 120.000 beträgt,
   D der deprotonierte Rest eines 2-4-wertigen gegebenenfalls aromatenhaltigen Alkohols mit 2-18 C-Atomen oder eine chemische Einfachbindung ist,
   n so gewählt ist, daß das Molekulargewicht Mw des Polyetherblocks 4.000 bis 25.000, vorzugsweise 4.000 bis 20.000 beträgt,
   Z einen Diphenolrest der allgemeinen Formel (II) darstellt, 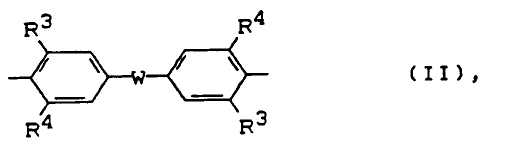 wobei
   R³, R⁴ H, sind und
   W, 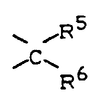 ist, wobei
   R⁵, R⁶ unabhängig voneinander Wasserstoff, C₁₋₁₈-Alkyl, Phenyl, bedeuten können, ferner die Reste R⁵/R⁶ zu einem Cycloalkylrest mit 4 - 18 Ringgliedern, vorzugsweise 5 - 6 Ringgliedern geschlossen sein können,
      und
b) 95 Gew.-% bis 5 Gew.-% eines gegebenenfalls verzweigten Polycarbonats auf Basis von Bisphenol-A oder 1,1-Bis-(4-hydroxyphenyl)-3,3,5-trimethylcyclohexan, wobei der Gesamtpolyethergehalt der Blends resultierend aus der Komponente a) > 18 Gew.-%, vorzugsweise > 25 Gew.-% beträgt.
Die erfindungsgemäßen Blends eignen sich insbesondere zur Herstellung von Membranen für die Dialyse, Hämofiltration, Ultrafiltration und Umkehresmose, zur Herstellung oder Beschichtung von Kunststoffformkörpern, Folien, Fasern und Vliesen.

Die segmentierten, aliphatisch-aromatischen PolyetherCopolycarbonate sind bekannt (siehe beispielsweise DE-OS 2 251 066, US-PS 4 160 791, US-PS 4 075 108, US-PS 4 069 151).

Sie können entweder in homogener Phase nach dem sogenannten Pyridinverfahren (z.B. US 4 160 791) oder nach dem Phasegrenzflächenverfahren aus Diphenolen, Polyetherdiphenolcarbonaten und Phosgen hergestellt werden (DE-OS 3 408 804).

Nach diesem Verfahren hergestellte Polyether-Copolycarbonate eignen sich insbesondere zur Herstellung von Membranen für die Hämodialyse, Hämofiltration, Ultrafiltration und Umkehrosmose (R.E. Kesting, Synthetic Polymeric Membranes, S. 146).

Um dafür ein optimales Verhältnis zwischen mechanischer Festigkeit, Ultrafiltrationsrate und Permeabilität für harnpflichtige Substanzen zu erzielen, ist es notwendig, daß Polyethercopolycarbonat mit jeweils genau definiertem Anteil an Hart- und Weichsegment zu synthetisieren. Braucht man, was für ein Sortiment von Dialysemembranen notwendig ist, Membranen mit variierten Leistungsdaten, so muß ein vollkommen neues Polymer synthetisiert werden. Dies ist technisch aufwendig und unwirtschaftlich.

Die Aufgabe der vorliegenden Erfindung bestand daher darin, eine technisch gut handhabbare und wirtschaftliche Lösung zur Herstellung von Membranen mit gezielt einstellbarem Leistungsspektrum zu finden.

Die Aufgabe wird gelöst durch Blends aus Polyether-Co-polycarbonaten und gegebenenfalls verzweigten Polycarbonaten auf Basis von Bisphenol-A oder 1.1-Bis-(4-hydroxyphenyl)-3.3.5-trimethylcyclohexan.

Es ist dabei möglich, aus einem Masterbatch eines Polyether-Polycarbonat-Blockcopolymeren mit hohem Anteil an Polyether durch Abmischen mit Polycarbonat Membranen mit gezielt abgestuftem Eigenschaftsbild herzustellen.

Aus der US-Patentschrift 4 252 922 sind Mischungen aus 80 bis 98 % Polycarbonaten und aus 20 bis 2 % Polyether-carbonaten mit 50 - 70 Gew.-% Polyetheranteil bekannt. Somit beträgt der erreichbare Polyetheranteil maximal 14 Gew.-%, bezogen auf Gesamtmischung. Derartige Mischungen haben jedoch den Nachteil, daß keine leistungsfähigen Dialysemembranen hergestellt werden können.

Die Herstellung der Blends aus den Komponenten a) und b), ist dadurch gekennzeichnet, daß man die Komponenten a) und b), in Pulverform, als Granulate oder als Lösungen unter möglichst schonenden Bedingungen mischt und die Mischung, gegebenenfalls nach Abdampfen der Lösungsmittel, Kristallisation, Fällung oder Sprühverdampfung, oder gegebenenfalls über die Schmelze, als Feststoff isoliert.

Schonende Bedingungen sind Temperaturbelastungen kleiner als +200°C.

Diphenole HO-Z-OH können beispielsweise, Bis-(hydroxyphenyl)-alkane und Bis-(hydroxyphenyl)-cycloalkane, sein.

Bevorzugte Diphenole sind beispielsweise, 2,2-Bis-(4-hydroxyphenyl)-propan, und 1,1-Bis-(4-hydroxyphenyl)-cyclohexan.

Die Diphenole können sowohl allein als auch im Gemisch miteinander verwendet werden, es sind also sowohl Homopolycarbonate als auch Copolycarbonate einbezogen. Die Diphenole sind literaturbekannt oder nach literaturbekannten Verfahren herstellbar.

Es können auch geringe Mengen, vorzugsweise Mengen zwischen 0,05 und 2,0 Mol-%, bezogen auf die Mole eingesetzter Diphenole, an tri- oder mehr als trifunktionellen Verbindungen, insbesondere solchen mit drei oder mehr als drei phenolischen Hydroxylgruppen, mitverwendet werden. Einige der verwendbaren Verbindungen mit drei oder mehr als drei phenolischen Hydroxylgruppen sind beispielsweise
4,6-Dimethyl-2,4,6-tri-(4-hydroxyphenyl)-hepten-2,
4,6-Dimethyl-2,4,6-tri-(4-hydroxyphenyl)-heptan,
1,3,5-Tri-(4-hydroxyphenyl)-benzol,
1,1,1-Tri-(4-hydroxyphenyl)-ethan,
Tri-(4-hydroxyphenyl)-phenylmethan,
2,2-Bis-[4,4-bis-(4-hydroxyphenyl)-cyclohexyl]-propan,
2,4-Bis-(4-hydroxyphenyl-isopropyl)-phenol,
2,6-Bis-(2-hydroxy-5'-methyl-benzyl)-4-methylphenol,
2-(4-Hydroxyphenyl)-2-(3,4-dihydroxyphenyl)-propan,
Hexa-(4-(4-hydroxyphenyl-isopropyl)-phenyl)-orthoterephthalsäureester,
Tetra-(4-hydroxyphenyl)-methan,
Tetra-(4-(4-hydroxyphenyl-isopropyl)-phenoxy)-methan und
1,4-Bis-(4',4"-dihydroxytriphenyl)-methyl-benzol.

Weitere mögliche Verzweiger sind 2,4-Dihydroxybenzoesäure, Trimesinsäure beziehungsweise Trimesinsäuretrichlorid, Cyanurchlorid und 3,3-Bis-(3-methyl-4-hydroxyphenyl)-2-oxo-2,3-dihydroindol.

Die gegegebenenfalls mitzuverwendenden 0,05 bis 2 Mol-%, bezogen auf eingesetzte Diphenole, an Verzweigern können entweder mit den Diphenolen selbst und den Molekulargewichtsreglern in der wäßrigen alkalischen Phase vorgelegt werden, oder in einem organischen Lösungsmittel, gelöst vor oder während der Phosgenierung, zugegeben werden.

Geeignete Molekulargewichtsregler sind Monocarbonsäurechloride oder Monophenole, vorzugsweise Monophenole wie z.B. Phenol, 4-Alkylphenole, wie p-tert.-Butylphenol, p-i-Octylphenol, p-Nonylphenol, p-Dodecylphenol.

Polyetherblöcke, wie sie zu 25 - 90 Gew.-% in die erfindungsgemäßen aromatischen Blockcopolycarbonate einkondensiert werden, sind solche, denen Diole auf Basis von Alkoholen mit aliphatischen gebundenen Hydroxylgruppen zugrunde liegen. Derartige Polyether können als Verzweiger Polyole mit 3-4 Hydroxylgruppen enthalten.

Diole im Sinne dieser Polyether sind beispielsweise Ethylenglykol, 1,2-Propandiol, beziehungsweise die entsprechenden Epoxide.

Bevorzugte Polyetherbausteine sind Ethylenglykol und Propandiol -1,2. Den verwendeten Polyethern können mehr als ein Diolbaustein zugrunde liegen. Bevorzugt ist in diesem Falle ein segmentierter Aufbau der Polyether. Ferner können die Polyether mit Verzweigern versehen sein und dadurch einen sternförmigen Aufbau besitzen, wobei ebenfalls ein segmentierter Aufbau möglich ist.

Polyole, die als Verzweiger verwendet werden können, sind z.B. Glycerin, Trimethylolpropan, Trimethylolethan, Pentaerythrit oder Hexandiole.

Die Synthese der Polyether-Copolycarbonate kann nach den Verfahren, wie sie für die rein aromatischen Polycarbonat beschrieben sind, durchgeführt werden, jedoch ist die Aufkondensation in einem Kneter statt eines Kessels bevorzugt. Die Regulierung des Molekulargewichts kann, wie bei den aromatischen Polycarbonaten üblich, mit den genannten Verzweigern und/oder Kettenabbrechern vorgenommen werden.

Im Detail lassen sich Polyether-Copolycarbonate also wie folgt, alternativ, herstellen:
a) Nach dem Phasengrenzflächenverfahren aus Bispheno-1(en) und hydroxylterminierten Polyethern,
b) durch Umesterung von Diphenylcarbonat mit Bispheno-1(en) und hydroxylterminierten Polyethern,
c) durch Herstellung eines Vorkondensats aus Bispheno-l(en) und hydroxylterminierten Polyethern nach dem Schmelzumesterungsverfahren oder dem Phasengrenzflächenverfahren und deren anschließende Aufkondensation nach den bekannten Verfahren,
d) durch Herstellung eines Vorkondensats aus Polycarbonat und Polyethern durch Umesterung in Schmelze oder bevorzugt in Lösung unter saurer oder alkalischer, vorzugsweise alkalischer Katalyse und der Aufkondensation dieser Prepolymeren nach dem Schmelzumesterungs- oder Phasengrenzflächenverfahren,
e) Compoundierung der Vorkondensate mit hochmolekularem Polycarbonat.

Die so erhaltenen Polyether-Copolycarbonate werden wie bereits erwähnt, in bekannter Art und Weise mit den gegebenenfalls verzweigten Polycarbonaten auf Basis von Bisphenol-A oder 1.1-Bis-(4-hydroxyphenyl)-3.3.5-trimethylcyclohexan aus Lösung oder Schmelze vermischt, entweder aus den festen Polymeren auf dem Extruder oder aus den Lösungen über Ausdampfextruder oder aus gemeinsamen Lösungen beider Polymerer durch Fällung, Kristallisation, Verdampfen des Lösungsmittels, Gelieren oder Sprühverdampfung, gegebenenfalls unter Zumischung von Hilfsmitteln wie Alkoholen oder Kohlenwasserstoffen oder Hilfsgasen, wie Luft, Stickstoff oder CO₂, wobei CO₂ unter Druck auch in flüssiger Form zugemischt werden kann.

Die so erhaltenen Blends können je nach Verwendung mit den für Polyether oder Polycarbonaten typischen Stabilisatoren wie UV-Stabilisatoren, Thermostabilisatoren sowie Verarbeitungshilfsmitteln, wie Entformungs- oder Gleitmitteln, versehen werden. Ebenfalls können in bekannter Art und Weise Füllstoffe und Nucleierungsmittel, wie Mineralpulver, Glaskugeln und Glasfasern zugesetzt werden.

Eine Erweiterung der erfindungsgemäßen Blends ist noch dadurch möglich, daß zusätzliche hydrophile Blendpartner wie Polyvinylpyrrolidon oder Polyacrylsäuren mit den erfindungsgemäßen Blends gemischt werden.

Die erfindungsgemäßen Blends können in bekannter Weise zu den verschiedensten Formkörpern insbesondere zu Membranen verarbeitet werden.

Gegenstand der vorliegenden Erfindung ist somit auch die Verwendung der erfindungsgemäßen Mischungen zur Herstellung von Membranen.

Gegenstand der vorliegenden Erfindung sind außerdem Membranen, hergestellt aus den erfindungsgemäßen Mischungen aus den Komponenten a) und b).

Gegenstand der vorliegenden Erfindung ist außerdem die Verwendung der erfindungsgemäßen Membranen für die Dialyse.

### Methode zur Bestimmung der Membranleistung:

Die Ultrafiltrationsrate der Membranen wird bestimmt durch Messung des Flüssigkeitsvolumens, das bei gegebener Druckdifferenz bei einer Temperatur von 37°C durch eine mit der Apparatur festgelegte Membranfläche durch die Membran hindurch tritt und das zur allgemeinen Vergleichbarkeit auf Flächeneinheit, Zeiteinheit und Druckeinheit normiert wird. Als Flüssigkeit zur Bestimmung der Ultrafiltrationsrate wird Wasser verwendet. Die Methode ist u.a. beschrieben in "Evaluation of Hämodialyzers and Dialysis Membranes" des U.S. Departement of Health, Education and Welfare, DHEW Publication No (NIH) 778-1294, S. 24 - 26.

Als Testsubstanz für die Urämigifte dient Natriumchlorid. Gemessen wird die diffuse, drucklose Konzentrationsänderung zweier unterschiedlich konzentrierter Ausgangslösungen zu beiden Seiten der Membran mit der Zeit mittels einer Kaufmann-Leonhard-Zelle. Die ClKonzentration in beiden Zellen kann leicht über Leitfähigkeitsmessungen ermittelt werden.

### Beispiel 1

Nach dem in DE-OS 2 408 804 beschriebenen Verfahren wird ein Polycarbonat Blockcopolymer der Formel 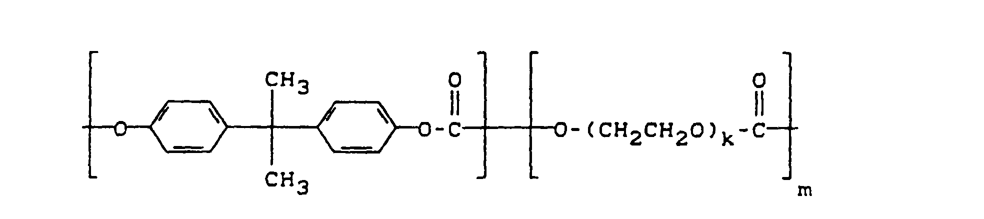 mit einem Anteil von 50 Gew.-% eines Polyglycolethers vom Mₙ 8000 hergestellt. Die relative Viskosität gemessen an einer 0,5%igen Lösung des Polymeren in CH₂Cl₂ bei 20°C beträgt ηᵣₑₗ = 1,79 gemessen in einem Ubbelohde-Viskosimeter.

Zur Herstellung eines Blends werden 7,0 g dieses Blockcopolymeres gewonnen mit 9,0 g eines hochmolekularen Bisphenol-A-polycarbonats der relativen Viskosität ηᵣₑₗ = 2,4, gemessen an einer 0,5%igen Lösung des Polymeren in CH₂Cl₂ bei 20°C, in 84 g N-Methylpyrrolidon bei 80°C durch 3 stündiges Rühren gelöst.

### Beispiel 2

Die Lösung aus Beispiel 1 läßt man auf 25°C erkalten, filtriert über eine Seitz Filterschicht Supra 100 und entgast anschließend.

Zur Herstellung einer Dialysemembran wird diese Gießlösung mittels eines Rakels auf einer Glasplatte zu einem Film von 60 µm Dicke verzogen. Anschließend wird die beschichtete Glasplatte senkrecht in ein Fällbad mit H₂O einer Temperatur von 25°C als Fällmittel langsam hineingestellt. Nach ca. 15 min löst sich die Membran von dem Glas ab, anschließend wird diese bezüglich Ultrafiltrationsrate und dialytischer Chloridpermeabilität untersucht.

Die Resultate betragen

| | |
|---|---|
| UF-Wert [ml/h x m² x mbar] | 19,7 |
| Cl-Permeabilität [cm/s x 10⁻⁴] | 5,2 |

### Beispiel 3

### Beschichtung einer PC-Platte:

Die Lösung des Blends aus Beispiel 1 wird zur Trocknung einrotiert. Nach Trocknung im Vakuumtrockenschrank bei 70°C wird 1,0 g Feststoff entnommen und unter Zusatz von 0,2 g Dodecylbenzolsulfonat bei 90°C in 99 g 1,3-Dioxolan gelöst. Die klare Lösung wird mittels eines Handrakels auf eine Polycarbonat-Platte aufgetragen und 10 Minuten bei 70°C getrocknet.

### Benutzungsverhalten:

Die beschichtete Kunststoffplatte wird in Wasser eingetaucht. Nach dem Herausnehmen bildet sich - im Gegensatz zu einer unbeschichteten Platte spontan eine dünne Wasserschicht aus. Auf der unbeschichteten Platte bleiben einige Wassertropfen zurück. Durch die Beschichtung erhalten die Platten eine wassersprühende Oberfläche.

## Patentansprüche

1. Blends aus
a) 5 Gew.-% bis 95 Gew.-% eines segmentierten, aliphatisch-aromatischen Polyether-Copolycarbonats mit Mw (Gewichtsmittel) von 20.000 bis 350.000 (ermittelt nach der Lichtstreumethode mit dem Streulichtphotometer) der allgemeinen Formel (I) mit einem Gehalt von 10 Gew.-% bis 75 Gew.-% an aromatischen Carbonatstruktureinheiten 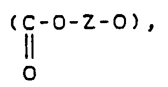 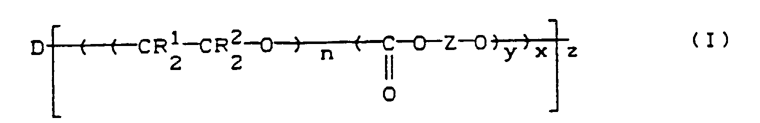 worin
R¹, R² unabhängig voneinander H, C₁-Alkyl bedeuten
z 2 bis 4, ist,
n, x, y so gewählt sind, daß das gesamte Molekulargewicht Mw im Mittel 2000-350000 beträgt,
D der deprotonierte Rest eines 2-4-wertigen gegebenenfalls aromatenhaltigen Alkoholes mit 2-18 C-Atomen oder eine chemische Einfachbindung ist,
n so gewählt ist, daß das Molekulargewicht Mw des Polyetherblocks 4.000 bis 25.000 beträgt,
Z einen Diphenolrest der allgemeinen Formel (II) darstellt, 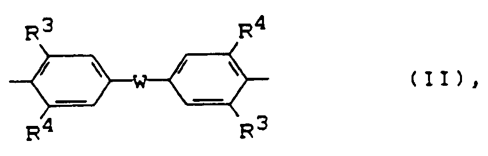 wobei
R³, R⁴ H, sind, und,
W, 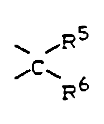 ist, wobei
R⁵, R⁶ unabhängig voneinander Wasserstoff, C₁₋₁₈-Alkyl, Phenyl, bedeuten können, ferner die Reste R⁵/R⁶ zu einem Cycloalkylrest mit 4 - 18 Ringgliedern geschlossen sein können,
und
b) 95 Gew.-% bis 5 Gew.-% eines gegebenenfalls verzweigte Polycarbonats, auf Basis von Bisphenol A oder 1,1-Bis-(4-hydroxyphenyl)-3,3,5-trimethylcyclohexan, wobei der Ge-samtpolyethergehalt der Blends resultierend aus der Komponente a) ≥ 18 Gew.-% beträgt.

2. Blends gemäß Anspruch 1, dadurch gekennzeichnet, daß Polyvinylpyrrolidon oder Polyacrylsäuren zugemischt sind.

3. Verwendung der Blends des Anspruchs 1 zur Herstellung von Membranen.

4. Membranen, hergestellt aus den Blends des Anspruchs 1.

5. Verwendung der Membranen des Anspruchs 4 für die Dialyse.

## Claims

1. Blends of
a) from 5 wt.% to 95 wt.% of a segmented, aliphaticaromatic polyether copolycarbonate having M_{w} (weight average) of from 20,000 to 350,000 (determined by the light-scattering method using the light-scattering photometer) corresponding to the general formula (I) and having a content of from 10 wt.% to 75 wt.% of aromatic carbonate structural units 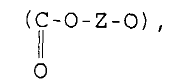 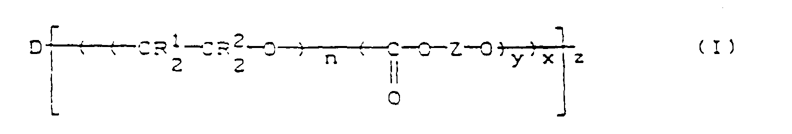 wherein
R¹, R² independently of one another signify H, C₁ alkyl,
z is 2 to 4,
n, x, y are so selected that the total molecular weight M_{w} is on average from 20,000 to 35,000,
D represents the deprotonated group of a dihydric to tetrahydric alcohol having 2 to 18 C atoms and optionally containing aromatic constituents, or is a single chemical bond,
n is so selected that the molecular weight M_{w} of the polyether block is from 4,000 to 25,000,
Z represents a diphenol group corresponding to the general formula (II) 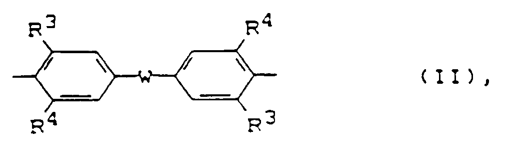 wherein
R³, R⁴ represent H and
w represents 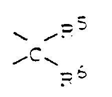 wherein
R⁵, R⁶ independently of one another may signify hydrogen, C₁₋₁₈ alkyl, phenyl, moreover the groups R⁵/R⁶ may be closed to form a cycloalkyl group containing 4 to 18 ring members,
and
b) from 95 wt.% to 5 wt.% of an optionally branched polycarbonate based on bisphenol A or 1,1-bis(4hydroxyphenyl) -3,3,5-trimethylcyclohexane, the total polyether content of the blends resulting from component a) being ≥ 18 wt.%.

2. The blends according to claim 1, characterised in that polyvinylpyrrolidone or polyacrylic acids are admixed thereto.

3. The use of the blends according to claim 1 for the preparation of membranes.

4. Membranes, prepared from the blends according to claim 1.

5. The use of the membranes according to claim 4 for dialysis.

## Revendications

1. Mélanges de
a) 5% en poids à 95% en poids d'un polyéther-copolycarbonate aliphatique-aromatique segmenté avec Mw (moyenne en poids) de 20 000 à 350 000 (déterminé selon la méthode de diffusion de la lumière au photomètre de lumière diffusée) de formule générale (I) avec une teneur de 10% en poids à 75% en poids d'unités structurelles carbonate aromatique 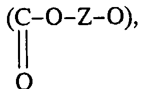 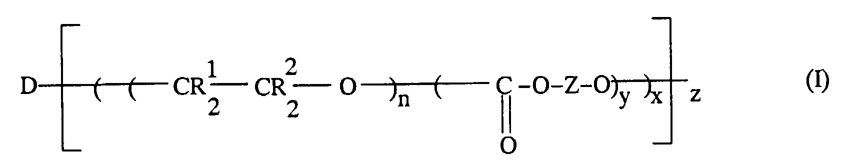 où
R¹, R² indépendamment l'un de l'autre représentent H, un alkyle C₁,
z représente 2 à 4,
n, x, y sont choisis de telle façon que le poids moléculaire global Mw en moyenne est 20 000 à 350 000,
D est le reste déprotoné d'un alcool à teneur aromatique le cas échéant à 2-4 fonctions avec 2-18 atomes de carbone ou une liaison chimique simple,
n est choisi de telle façon que le poids moléculaire Mw du bloc polyéther est 4 000 à 25 000,
Z est un reste diphénol de formule générale (II), 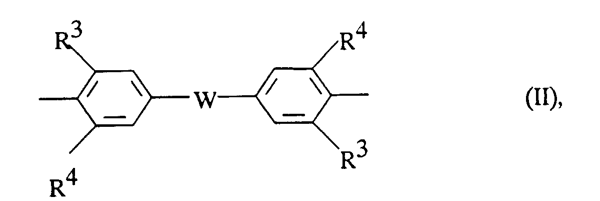 où
R³, R⁴ représentent H, et
W est 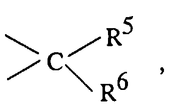 où
R⁵, R⁶ représentent indépendamment l'un de l'autre un hydrogène, alkyle C₁-C₁₈, phényle, en outre les restes R⁵/R⁶ peuvent être cyclisés en un reste cycloalkyle de 4-18 maillons,
b) 95% en poids à 5% en poids d'un polycarbonate ramifié le cas échéant à base de bisphénol A ou de 1,1-bis-(4-hydroxyphényl)-3,3,5-triméthylcyclohexane, où la teneur globale en polyéther du mélange obtenu à partir du composant (a) est supérieure ou égale à 18% en poids.

2. Mélanges selon la revendication 1, caractérisés en ce qu'on ajoute par mélange de la polyvinylpyrrolidone ou des acides polyacryliques.

3. Utilisation des mélanges selon la revendication 1, pour produire des membranes.

4. Membranes préparées à partir des mélanges de la revendication 1.

5. Utilisation des membranes selon la revendication 4 pour la dialyse.
